# EUROPEAN PATENT APPLICATION

(11) **EP 3 598 272 A1**
(43) Date of publication of application: **22.01.2020**
(21) Application number: 19176505.6
(22) Date of filing: 24.05.2019
(51) Int. Cl.: G06F 3/01, A63F 13/20, G06F 3/02, H01H 21/00

(54) **TRIGGER BUTTON FOR HAPTIC CONTROLLER**

(30) Priority: 18.07.2018 US 201816039161
(71) Applicant: Immersion Corporation, San Jose, CA 95134 (US)
(72) Inventor: FOREST, Simon, Montreal, Québec H1X 3P2 (CA); GRANT, Danny A., Laval, Québec H7M 2A1 (CA); VAUDRY-READ, Thomas, Chateauguay, Québec J6K 2P6 (CA); OLIEN, Neil T., Montreal, Québec H4B 2V3 (CA)
(74) Representative: Hofstetter, Schurack & Partner

(57) **Abstract**

The present invention provides a controller that includes a housing, a communication interface to receive a haptic effect signal, a haptic actuator to generate a haptic effect based on the haptic effect signal, and a trigger. The haptic actuator is mechanically coupled to the housing and electrically coupled to the communication interface. The trigger is mechanically coupled to the housing and the haptic actuator, and includes a rotational coupling at a proximal end, a face, and an end effector at a distal end. The face is configured to engage a first surface of the finger during generation of the haptic effect, and the end effector configured to engage a second surface of the finger during generation of the haptic effect. The present invention effectively provides a haptic effect on the finger in two directions rather than a single direction.

## Description

### TECHNICAL FIELD

The present invention relates to an input/output device for a computer-based device. More particularly, the present invention relates to a haptic controller.

### BACKGROUND

Electronic gaming devices, such as personal computers, home video game consoles, handheld video game consoles, etc., typically use visual and auditory cues to provide feedback to a user. In some electronic devices, tactile feedback and/or kinesthetic feedback may be provided to the user. Tactile feedback is known as "tactile haptic feedback" or "tactile haptic effects," and may include, for example, vibration, texture, temperature variation, etc. Kinesthetic feedback is known as "kinesthetic haptic feedback" or "kinesthetic haptic effects," and may include, for example, active and resistive force feedback. In general, tactile and kinesthetic feedback are collectively known as "haptic feedback" or "haptic effects." Haptic effects provide cues that enhance a user's interaction with an electronic device, from augmenting simple alerts to specific events to creating a greater sensory immersion for the user within an augmented, simulated or virtual environment, such as, for example, a gaming environment.

Known game controllers may provide a haptic effect to the user by vibrating a trigger on which the user's finger is resting or touching. However, the haptic effect is only felt by the user's finger when the trigger is moving in one direction, such as, for example, when the trigger is moving toward the user's finger. The haptic effect is not felt by the user's finger when the trigger is moving in the opposite direction, such as, for example, when the trigger is moving away from the user's finger because this motion causes the trigger to lose contact with the user's finger for a brief period of time. In other words, the loss of contact between the trigger and the user's finger causes the user to feel the haptic effect in one direction.

### SUMMARY

Embodiments of the present invention advantageously provide a controller that includes a housing, a communication interface to receive a haptic effect signal, a haptic actuator to generate a haptic effect based on the haptic effect signal, and a trigger. The haptic actuator is mechanically coupled to the housing and electrically coupled to the communication interface. The trigger is mechanically coupled to the housing and the haptic actuator, and includes a rotational coupling at a proximal end, a face, and an end effector at a distal end. The face is configured to engage a first surface of the finger during generation of the haptic effect, and the end effector configured to engage a second surface of the finger during generation of the haptic effect.

### BRIEF DESCRIPTION OF THE DRAWINGS

FIG. 1 illustrates a block diagram of a system, in accordance with an embodiment of the present invention.
FIG. 2 depicts a controller, in accordance with an embodiment of the present invention.
FIG. 3 depicts a cross-sectional view of a trigger for a controller, in accordance with an embodiment of the present invention.
FIG. 4A depicts a cross-sectional view of the trigger depicted in FIG. 3 in a first position.
FIG. 4B depicts a cross-sectional view of the trigger depicted in FIG. 3 in a second position.
FIG. 5 depicts a cross-sectional view of the trigger depicted in FIG. 3, in accordance with another embodiment of the present invention.
FIG. 6 depicts a cross-sectional view of a trigger, in accordance with another embodiment of the present invention.
FIG. 7 depicts a cross-sectional view of a trigger, in accordance with another embodiment of the present invention.

### DETAILED DESCRIPTION

Embodiments of the present invention will now be described with reference to the drawing figures, in which like reference numerals refer to like parts throughout.

Embodiments of the present invention advantageously provide a controller that includes a housing, a communication interface to receive a haptic effect signal, a haptic actuator to generate a haptic effect based on the haptic effect signal, and a trigger. The haptic actuator is mechanically coupled to the housing and electrically coupled to the communication interface. The trigger is mechanically coupled to the housing and the haptic actuator, and includes a rotational coupling at a proximal end, a face, and an end effector at a distal end. The face is configured to engage a first surface of the finger during generation of the haptic effect, and the end effector configured to engage a second surface of the finger during generation of the haptic effect.

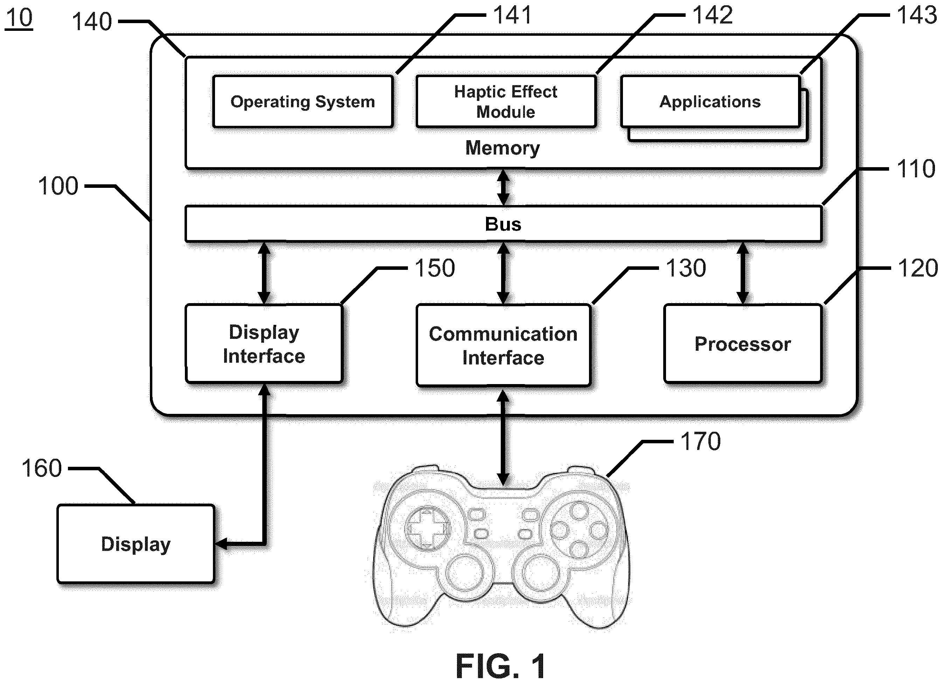

FIG. 1 illustrates a block diagram of a system 10, in accordance with an embodiment of the present invention.

System 10 includes computer 100, display 160, and input/output device 170. Computer 100 may be a personal computer, a laptop computer, a game console, etc. Display 160 may be a liquid crystal display (LCD) monitor, an LCD television, etc. Input/output device 170 may be a game controller, a data glove, etc.

Computer 100 includes bus 110, one or more processors 120, communication interface 130, memory 140 and display interface 150. Communication interface 130 is coupled to input/output device 170, and display interface 150 is coupled to display 160. Generally, bus 110 is a communication system that transfers data between processor 120, communication interface 130, memory 140 and display interface 150, as well as other components not depicted in FIG. 1.

Processor 120 includes one or more general-purpose or application-specific microprocessors to perform computation and control functions for computer 100. Processor 120 may include a single integrated circuit, such as a micro-processing device, or multiple integrated circuit devices and/or circuit boards working in cooperation to accomplish the functions of processor 120. In addition, processor 120 may execute computer programs, such as operating system 141, haptic effect module 142, applications 143, etc., stored within memory 140. Applications 143 may include one or more video games, virtual reality applications, etc.

Communication interface 130 is configured to transmit and/or receive data from input/output device 170. Communication interface 130 enables connectivity between processor 120 and input/output device 170 by encoding data to be sent from processor 120 to input/output device 170, and decoding data received from input/output device 170 for processor 120. Data may be sent over a wired connection or a wireless connection.

For example, communication interface 130 may include a wireless interface card that is configured to provide a wireless connection. A variety of wireless communication techniques may be used including infrared, radio, Bluetooth, Wi-Fi, etc. Alternatively, communication interface 130 may be configured to provide a wired connection, such as a Universal Serial Bus (USB) connection, etc.

Memory 140 stores information and instructions for execution by processor 120. Memory 140 may contain various components for retrieving, presenting, modifying, and storing data. For example, memory 140 may store software modules that provide functionality when executed by processor 120. The modules may include an operating system 141 that provides operating system functionality for computer 100. The modules may also include haptic effect module 142 generates a haptic effect experienced at input/output device 170. In certain embodiments, haptic effect module 142 may include a plurality of modules, each module providing specific individual functionality for generating a haptic effect experienced at input/output device 170. The modules may also include one or more application 143 that provide additional functionality, such as peripheral firmware configured to provide control functionality for a peripheral device, such as input/output device 170.

Generally, memory 140 may include a variety of non-transitory computer-readable medium that may be accessed by processor 120. In the various embodiments, memory 140 may include volatile and nonvolatile medium, non-removable medium and/or removable medium. For example, memory 140 may include any combination of random access memory ("RAM"), dynamic RAM (DRAM), static RAM (SRAM), read only memory ("ROM"), flash memory, cache memory, and/or any other type of non-transitory computer-readable medium.

Input/output device 170 is a peripheral device configured to provide input to computer 100 and haptic feedback to the user. As noted above, input/output device 170 may be operably connected to computer 100 using either a wireless connection or a wired connection. Input/output device 170 also may include a local processor configured to communicate with computer 100 using the wireless connection or wired connection.

Input/output device 170 may include one or more digital buttons, one or more analog buttons, one or more bumpers, one or more directional pads, one or more analog or digital sticks, one or more driving wheels, and/or one or more user input elements that can be interacted with by a user, and that can provide input to computer 100. As is described below in greater detail, input/output device 170 also includes one or more analog or digital trigger buttons ("triggers") that provide input to computer 100 from the user.

Generally, input/output device 170 includes one or more haptic actuators. The local processor of input/output device 170, or processor 120 in embodiments where input/output device 170 does not include a local processor, may transmit a haptic signal associated with a haptic effect to at least one haptic actuator of input/output device 170. The haptic actuator, in turn, outputs haptic effects such as vibrotactile haptic effects, kinesthetic haptic effects, or deformation haptic effects, in response to the haptic signal. The haptic effects can be experienced at a user input element, such as, for example, a trigger, a digital button, analog button, bumper, directional pad, analog or digital stick, driving wheel, etc., of input/output device 170. More particularly, input/output device 170 includes a haptic actuator configured to provide a haptic effect, such as, for example, a bi-directional push/pull force or vibration, to at least one trigger of input/output device 170. Additionally, the haptic effects can be experienced at an outer surface of input/output device 170.

The haptic actuator may be, for example, an electric motor, an electromagnetic actuator, a voice coil, a shape memory alloy, an electro-active polymer, a solenoid, an eccentric rotating mass motor ("ERM"), a harmonic ERM motor ("HERM"), a linear actuator, a linear resonant actuator ("LRA"), a piezoelectric actuator, a high bandwidth actuator, an electroactive polymer ("EAP") actuator, an electrostatic friction display, an ultrasonic vibration generator, etc. In some instances, the haptic actuator may include an actuator drive circuit.

In some embodiments, the haptic actuator design may be configured to create directional inertial haptic effects, such as haptic effects produced along an axis. For example, multiple magnetic components may be suspended in a gel such that two sets of magnets may cause the magnetic components to move along two independent directions.

Input/output device 170 may further include one or more speakers. The local processor of input/output device 170, or processor 120 in embodiments where input/output device 170 does not include a local processor, may transmit an audio signal to at least one speaker of input/output device 170, which in turn outputs audio effects. The speaker may be, for example, a dynamic loudspeaker, an electrodynamic loudspeaker, a piezoelectric loudspeaker, a magnetostrictive loudspeaker, an electrostatic loudspeaker, a ribbon and planar magnetic loudspeaker, a bending wave loudspeaker, a flat panel loudspeaker, a heil air motion transducer, a plasma arc speaker, and a digital loudspeaker.

Input/output device 170 can further include one or more sensors. A sensor may be configured to detect a form of energy, or other physical property, such as, but not limited to, sound, movement, acceleration, bio signals, distance, flow, force/pressure/strain/bend, humidity, linear position, orientation/inclination, radio frequency, rotary position, rotary velocity, manipulation of a switch, temperature, vibration, or visible light intensity. The sensor may further be configured to convert the detected energy, or other physical property, into an electrical signal, or any signal that represents virtual sensor information, and input/output device 170 can send the converted signal to the local processor of input/output device 170, or processor 120 in embodiments where input/output device 170 does not include a local processor.

In many embodiments, input/output device 170 is a controller, such as, for example, a game controller.

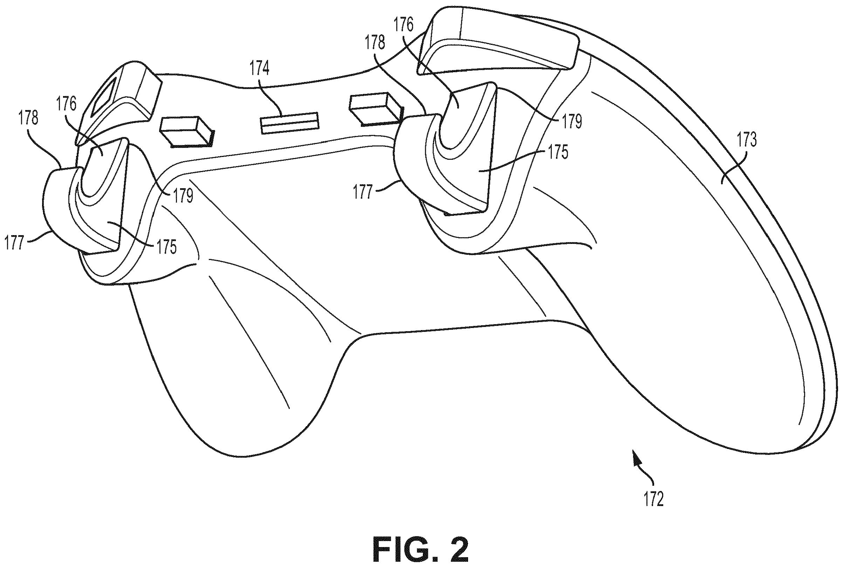

FIG. 2 depicts controller 172, in accordance with an embodiment of the present invention.

Controller 172 may include a variety of components, including housing 173, communication interface 174, and one or more triggers 175, haptic actuators (not shown for clarity), joysticks, buttons, touchpads, light emitting diodes (LEDs), LCD displays, etc.

Housing 173 is shaped to easily accommodate user gripping of controller 172.

Communication interface 174 may provide a wired connection, such as, for example, a USB cable port, to computer 100. Alternatively, communication interface 174 may provide a wireless connection, such as, for example, Bluetooth, to computer 100. An appropriate interface card, electronics board, components, etc., are also provided. Electrical power for controller 172 may be provided through the wired connection, or, alternatively, through rechargeable batteries, a dedicated power cord, etc. Communication interface 174 receives a haptic effect signal from computer 100, and sends the haptic effect signal to a haptic actuator, over an electrical coupling, which generates a haptic effect based on the haptic effect signal. When controller 172 includes an internal microprocessor, communication interface 174 may send the haptic signal to the microprocessor, which may process the haptic signal before sending the haptic effect signal to the haptic actuator.

Generally, trigger 175 is mechanically coupled to housing 173. In certain embodiments, trigger 175 may be a linear trigger, i.e., a trigger that moves forward and backward in a linear motion, while in other embodiments, trigger 175 is rotating trigger, i.e., a trigger that rotates about an axis of rotation.

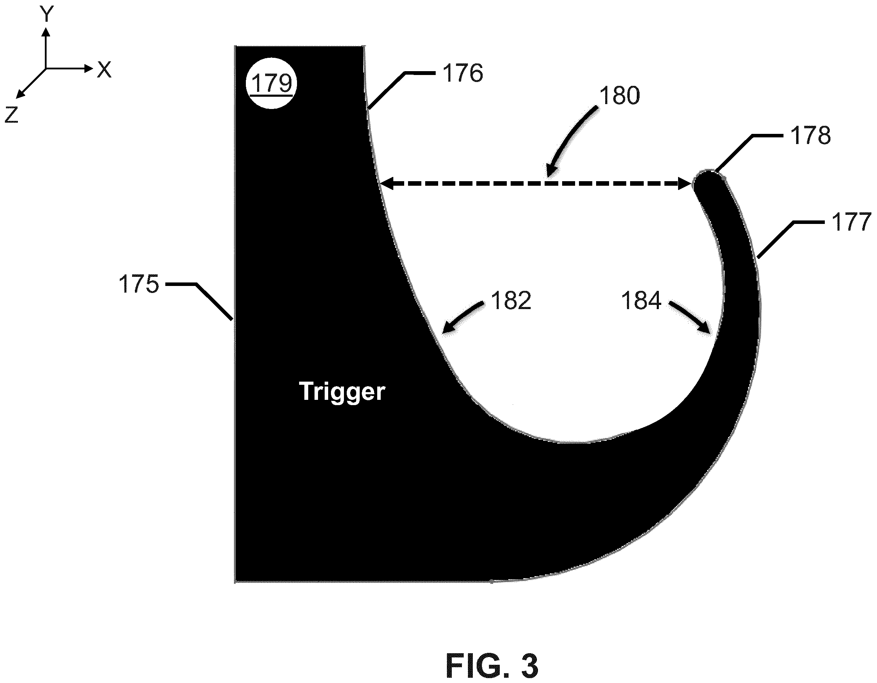

FIG. 3 depicts a cross-sectional view of trigger 175 for controller 172, in accordance with an embodiment of the present invention.

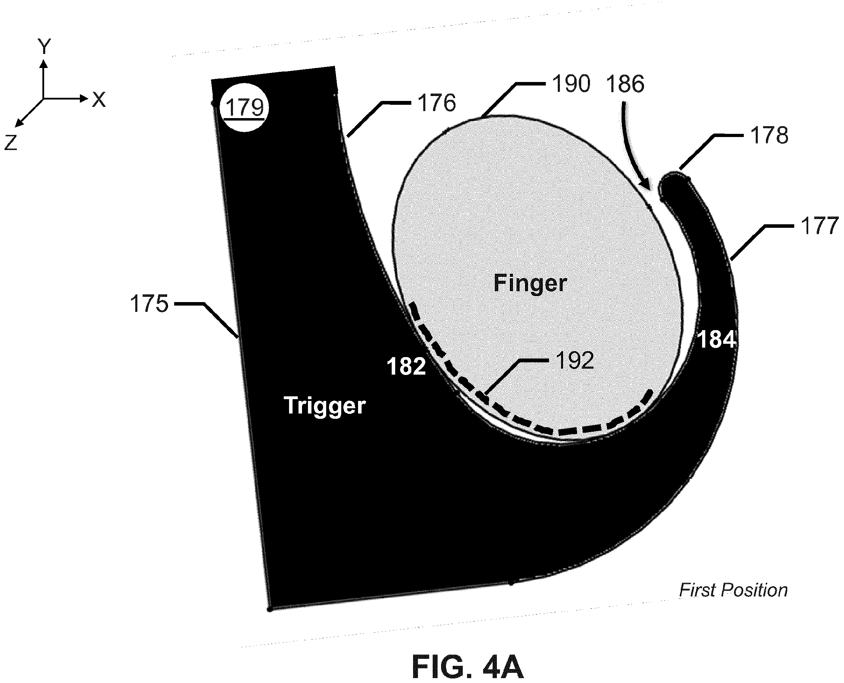

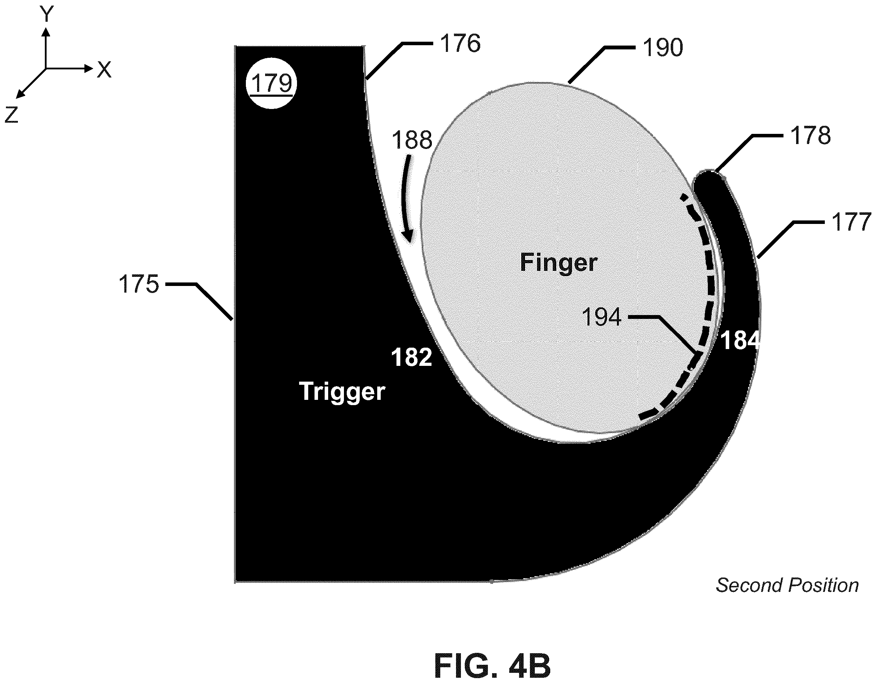

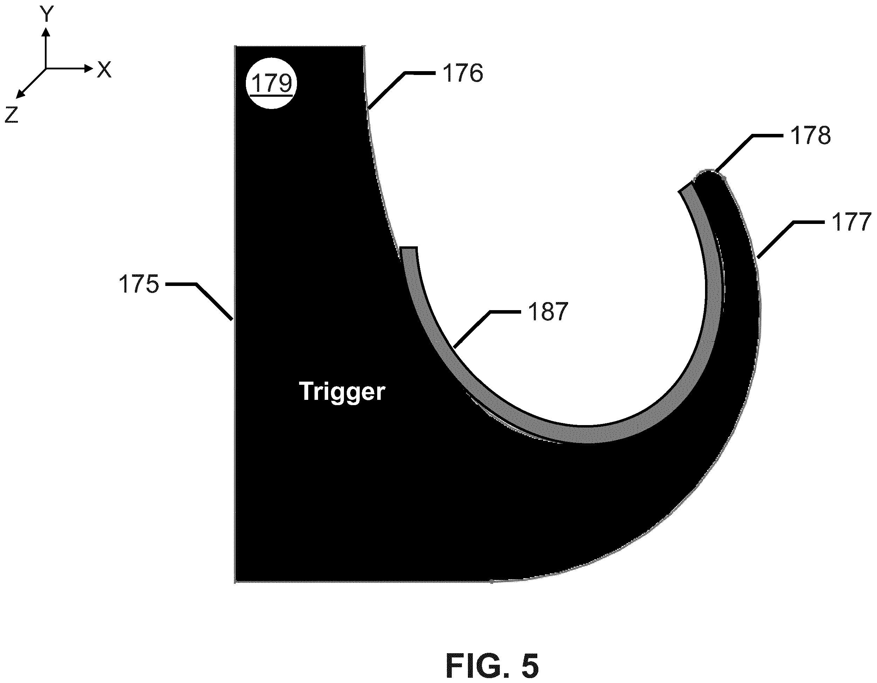

In this embodiment, trigger 175 includes a rotational coupling 179 at the upper (proximal) end, a face 176 and an end effector 177 that extends from the lower (distal) end. Rotational coupling 179 connects trigger 175 to housing 173, and allows trigger 175 rotate about an axis, such as the Z-axis depicted in FIG. 3. Rotational coupling 179 may be a hinge, a flexure, etc. Portion 182 of face 176 is configured to engage a surface of the finger during generation of the haptic effect. Portion 184 of end effector 177 is similarly configured to engage a different surface of the finger during generation of the haptic effect. These engagements are illustrated in more detail in the embodiment depicted in of FIGS. 4 and 5.

In certain embodiments, end effector 177 is an arcuate surface, opposing face 176, that has an edge 178 defining a gap 180 between end effector 177 and face 176 through which the finger is passed. As depicted in FIG. 3, gap 180 is disposed in the X-Z plane. The finger is moved in the Y direction through gap 180 into engagement with trigger 175, or the finger is moved in the Z direction into engagement with trigger 175. Generally, gap 180 may provide some play around the finger. The dimensions of gap 180 may be larger than or smaller than the diameter of the finger. Alternatively, the dimensions of gap 180 may be zero, and end effector 177 and opposing face 176 define an annular space in which the finger is placed. In one example, edge 178 is in contact with, but not attached to, opposing face 176. In another example, edge 178 is attached to opposing face 176. In a further example, end effector 177 and opposing face 176 may be formed as a single, ring-shaped component.

A haptic actuator (not shown for clarity) is mounted to housing 173, and is mechanically coupled to trigger 175 and electrically coupled to communication interface 174. In certain embodiments, the haptic actuator generates a haptic effect by applying a torque to trigger 175, along the Z axis through rotational coupling 179, resulting in movement of trigger 175 in the X-Y plane. In this embodiment, portion 182 of face 176 and portion 184 of end effector 177 are perpendicular to the X-Y plane. In other embodiments, portion 182 and portion 184 may not be perpendicular to the X-Y plane, and the resulting movement of trigger 175 may be in a different plane.

In one embodiment, the torque may be applied to trigger 175 by a linear actuator that is attached (e.g., pinned, etc.) to trigger 175 such that a moment arm is created between the attachment point and the axis of rotation of rotational coupling 179. Periodic movement of the linear actuator produces a torque on trigger 175, which results in periodic movement of trigger 175 in the X-Y plane. This periodic movement conveys the haptic effect to two different surfaces of the finger. In another embodiment, the torque may be applied to trigger 175 by a motor that is attached to rotational coupling 179. Periodic rotation of the motor produces a torque on trigger 175, which results in periodic movement of trigger 175 in the X-Y plane. This periodic movement conveys the haptic effect to two different surfaces of the finger. For a linear trigger that is slidingly coupled to housing 173, a linear actuator may apply a periodic force to the linear trigger, which results in periodic movement of the linear trigger to convey the haptic effect to two different surfaces of the finger. Generally, face 176 has a rectangular shape, and the width of face 176 is less than the height of face 176, as depicted in FIG. 2. In other embodiments, the width of face 176 is about the same as the height of face 176, and the linear trigger may function as a grip button or a side button on housing 173. In these embodiments, face 176 may have a square, circular, triangular, cross, etc., shape. Other types of haptic actuators and attachment mechanisms are also contemplated by the present invention.

A spring (not shown for clarity) may be coupled to trigger 175 to return trigger 175 to a nominal position when force is not being applied by the user's finger. Alternatively, the haptic actuator may return trigger 175 to a nominal position when force is not being applied by the user's finger, or a spring may not be needed to return trigger 175 to a nominal position when force is not being applied by the user's finger. A position sensor (not shown for clarity) is mounted to housing 173 and configured to detect a position of trigger 175. Alternatively, the position sensor may be incorporated inside the haptic actuator.

During the generation of a haptic effect on a traditional controller without an end effector 177, the trigger repeatedly moves away from, and back towards, the controller. While the trigger is moving away from the controller, the trigger is pushing on the finger and this portion of the haptic effect is conveyed to the user. However, while the trigger is moving back toward the controller, the finger "floats," i.e., the finger is not in contact with the trigger, and this portion of the haptic effect is not conveyed to the user. The haptic feedback in this controller is thereby incomplete because the user is not able to feel the "pull" portion of the haptic effect. In one example, when a user is pulling the trigger of a traditional controller in order to fire a gun during a game, the user can feel the haptic effect when the trigger pushes on the user's finger. Conversely, when the user is not pulling the trigger to fire the gun, the user is not able to feel the haptic effect when the trigger is moving away from the user's finger.

In stark contrast, controller 172 advantageously renders haptic effects that not only push on the user's finger (via face 176) but also pull on the user's finger (via end effector 177), thereby allowing the user to feel all of haptic feedback in both directions.

FIG. 4A depicts a cross-sectional view of trigger 175 depicted in FIG. 3 in a first position, while FIG. 4B depicts a cross-sectional view of trigger 175 depicted in FIG. 3 in a second position.

In FIG. 4A, portion 182 of face 176 has engaged surface 192 of finger 190 during the generation of a haptic effect, and, in particular, when the movement of trigger 175 is along a first direction away from housing 173, such as the positive X direction. In this embodiment, a gap 186 exists between portion 184 of end effector 177 and finger 190.

Similarly, in FIG. 4B, portion 184 of end effect 177 has engaged surface 194 of finger 190 during the generation of a haptic effect, and, when the movement of trigger 175 is along a second direction moving toward housing 173 and opposite to the first direction, such as the negative X direction. In this embodiment, a gap 188 exists between portion 182 of face 176 and finger 190.

In the embodiment depicted in FIGS. 4A and 4B, during the generation of the haptic effect, portion 182 of face 176 periodically engages surface 192 of finger 190, and portion 184 of end effector 177 periodically engages surface 194 of finger 190. In other words, as trigger 175 moves back and forth during the generation of the haptic effect, portion 182 of face 176 and portion 184 of end effector 177 alternatingly engage finger 190. This engagement period is based on the frequency of the haptic effect signal.

As discussed above, finger 190 may fit into the space between face 176 and end effector 177 without leaving gap 186 or gap 188. In this case, portion 182 of face 176 continuously engages surface 192 of finger 190, and portion 184 of end effector 177 continuously engages surface 194 of finger 190. Advantageously, various embodiments of the present invention provide an adjustable trigger that continuously engages finger 190 during the generation of the haptic effect.

FIG. 5 depicts a cross-sectional view of trigger 175 depicted in FIG. 3, in accordance with another embodiment of the present invention. Insert member 187 may be attached to face 176 and end effector 177 to eliminate gap 186 and gap 188. Insert member 187 may be made from a hard or soft plastic or rubber, etc. Insert member 187 may be provided in different thicknesses to accommodate different finger sizes. Insert member 187 may be attached to trigger 175 using an adhesive, hook and loop fasteners, an interference or press fit, etc.

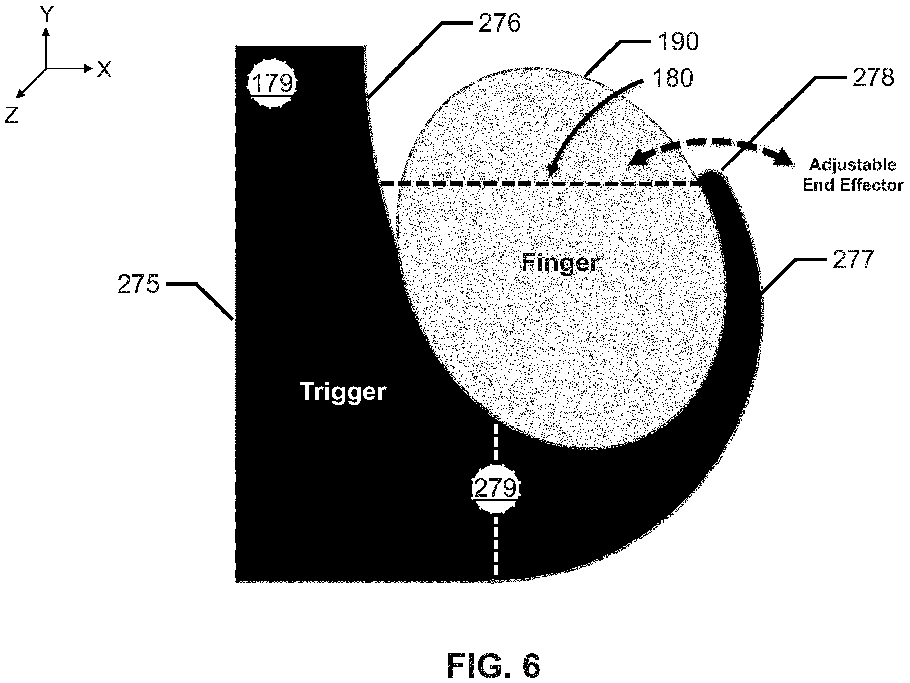

FIG. 6 depicts a cross-sectional view of trigger 275, in accordance with another embodiment of the present invention. Trigger 275 includes face 276 and adjustable end effector 277 to eliminate gap 186 and gap 188. In this embodiment, trigger 275 includes rotational coupling 279 that allows adjustable end effector 277 to rotate to different positions and then lock in place, thereby increasing or decreasing the width of gap 180 to accommodate different finger sizes. In a further embodiment, trigger 275 includes a flexible or deformable end effector 277, rather than a rotational coupling 279, to accommodate different finger sizes.

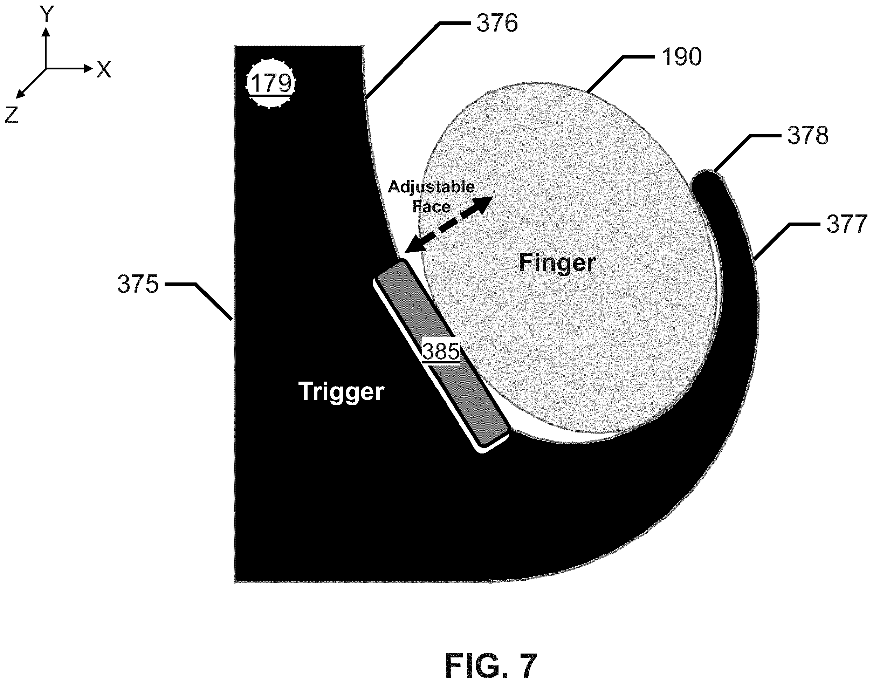

FIG. 7 depicts a cross-sectional view of trigger 375, in accordance with another embodiment of the present invention. Trigger 375 includes end effector 377 and face 376 to eliminate gap 186 and gap 188. In this embodiment, face 376 includes an adjustable portion 385 that eliminates gap 186 and gap 188 to accommodate different finger sizes. In this embodiment, adjustable portion 385 continuously engages surface 192 of finger 190, and end effector 377 continuously engages surface 194 of finger 190.

In one embodiment, the end effector is an elastic or non-elastic band or strap, attached to trigger 175, that couples finger 190 to trigger 175. In another embodiment, the end effector does not protrude from the distal end of trigger 175. Instead, the end effector is a sticky substance, such as an adhesive, that is applied at least to the distal end of face 176 and couples finger 190 to trigger 175. In another embodiment, the end effector is a magnet that is embedded in face 176. The magnet may be recessed, flush or protrude from the surface of face 176. A magnetic glove or finger glove, ring, etc., having the opposite polarity and worn on finger 190, couples finger 190 to trigger 175. In another embodiment, the end effector is a hook-and-loop fastener that is applied at least to the distal end of face 176 and couples finger 190 to trigger 175 using a glove or finger glove that also incorporates hook-and-loop fasteners.

The many features and advantages of the invention are apparent from the detailed specification, and, thus, it is intended by the appended claims to cover all such features and advantages of the invention which fall within the true spirit and scope of the invention. Further, since numerous modifications and variations will readily occur to those skilled in the art, it is not desired to limit the invention to the exact construction and operation illustrated and described, and, accordingly, all suitable modifications and equivalents may be resorted to that fall within the scope of the invention.

## Claims

1. A controller, comprising:
a housing;
a communication interface to receive a haptic effect signal;
a haptic actuator, mechanically coupled to the housing and electrically coupled to the communication interface, to generate a haptic effect based on the haptic effect signal; and
a trigger, mechanically coupled to the housing and the haptic actuator, including a proximal end, a face, and an end effector at a distal end, the face configured to engage a first surface of a finger during generation of the haptic effect, and the end effector configured to engage a second surface of the finger during generation of the haptic effect.

2. The controller according to claim 1, wherein the proximal end of the trigger is rotationally coupled to the housing using a hinge.

3. The controller according to claim 1, wherein the end effector is an arcuate surface, opposing the face, having an edge that defines a gap between the end effector and the face.

4. The controller according to claim 3, wherein the face engages the first surface of the finger when the haptic effect is generating movement of the trigger in a first direction, and the end effector engages the second surface of the finger when the haptic effect is generating movement of the trigger in a second direction opposite to the first direction.

5. The controller according to claim 4, wherein, during generation of the haptic effect, the face periodically engages the first surface of the finger, and the end effector periodically engages the second surface of the finger.

6. The controller according to claim 4, wherein, during generation of the haptic effect, the face continuously engages the first surface of the finger, and the end effector continuously engages the second surface of the finger.

7. The controller according to claim 6, further comprising an insert member, removably coupled to the face and the end effector, configured to continuously engage the first surface of the finger and the second surface of the finger;
or
wherein the end effector is rotationally coupled to the face and configured to adjust a width of the gap;
or
wherein the face includes an adjustable portion configured to continuously engage the first surface of the finger.

8. The controller according to claim 1, wherein the end effector is a band or a strap configured to continuously engage at least the second surface of the finger;
or
wherein the end effector is a magnet;
or
wherein the end effector is a hook-and-loop fastener
or
wherein the end effector is an arcuate surface, opposing the face, having an edge that contacts the face.

9. The controller according to claim 3, wherein the end effector is made from a flexible material that conforms to at least the second surface of the finger.

10. The controller according to claim 1, wherein the haptic actuator is a linear haptic actuator, and the trigger is a linear trigger slidingly coupled to the housing.

11. The controller according to claim 10, wherein the linear trigger functions as a button.

12. A trigger for a haptic controller, comprising:
a proximal end;
a face configured to engage a first surface of a finger during generation of a haptic effect; and
an end effector, disposed at a distal end, configured to engage a second surface of the finger during generation of the haptic effect, the end effector including:
an arcuate surface opposing the face, and
an edge that defines a gap between the end effector and the face,
wherein the face engages the first surface of the finger when the haptic effect is generating movement of the trigger in a first direction, and the end effector engages the second surface of the finger when the haptic effect is generating movement of the trigger in a second direction opposite to the first direction.

13. The trigger according to claim 12, wherein the proximal end of the trigger is rotationally coupled to the haptic controller using a hinge;
or
wherein the trigger is a linear trigger slidingly coupled to the haptic controller.

14. The trigger according to claim 12, further comprising an insert member, removably coupled to the face and the end effector, configured to continuously engage the first surface of the finger and the second surface of the finger.

15. The trigger according to claim 12, wherein the end effector is rotationally coupled to the face and configured to adjust a width of the gap;
or
wherein the face includes an adjustable portion configured to continuously engage the first surface of the finger;
or
wherein the end effector is made from a flexible material that conforms to at least the second surface of the finger.
